# EUROPEAN PATENT APPLICATION

(11) **EP 2 818 849 A1**
(43) Date of publication of application: **31.12.2014**
(21) Application number: 13748980.3
(22) Date of filing: 24.01.2013
(51) Int. Cl.: G01N 21/64

(54) **FLUORESCENT SENSOR AND SENSOR SYSTEM**

(30) Priority: 16.02.2012 JP 2012031964
(71) Applicant: Terumo Kabushiki Kaisha, Tokyo, 1510072 (JP)
(72) Inventor: OTA, Ryo, Ibaragi 305 8564 (JP); MATSUMOTO, Atsushi, Kanagawa 259-0151 (JP)
(74) Representative: TBK
(86) International application number: PCT/JP2013/051419
(87) International publication number: WO 2013/121850

(57) **Abstract**

A fluorescent sensor 30 includes a detecting substrate 11, an indicator 17, a filter layer 14, a light blocking layer 18, and an LED chip 15. In the detecting substrate 11, a PD element 12 for converting fluorescence into electric signals is formed in wall surfaces 22 of a through-hole 21 which penetrates a first main surface 11SA and a second main surface 11SB. The indicator 17 is arranged inside the through-hole 21 and generates fluorescence of intensity corresponding to analyte density when the indicator receives excitation light. The filter layer 14 covers the PD element, transmits fluorescence and blocks excitation light. The light blocking layer 18, through which an analyte can pass, covers an opening of the first main surface 11SA of the through-hole 21. The LED chip 15 covers a region just below an opening of the second main surface 11SB of the through-hole 21, and generates excitation light.

## Description

### Technical Field

The present invention relates to a fluorescent sensor that measures analyte density in liquid, and a sensor system including the fluorescent sensor. More specifically, the present invention relates to a fluorescent sensor which is a minute fluorometer manufactured by employing semiconductor manufacturing technology and MEMS technology, and a sensor system including the fluorescent sensor.

### Background Art

Various analyzing devices have been developed in order to measure the density of an analyte or a material to be measured in liquid. For example, a fluorometer is known, which measures analyte density by injecting, to a transparent container, a fluorescent dye and a solution to be measured including an analyte, irradiating the solution with excitation light, and then measuring fluorescent intensity from the fluorescent dye. The fluorescent dye generates fluorescence of intensity corresponding to analyte density when the property of the fluorescent dye has been changed in the presence of the analyte and has received excitation light.

A downsized fluorometer includes an illuminant, a photodetector, and an indicator including a fluorescent dye. An analyte in the solution to be measured can freely go in and out of the indicator. When the indicator is irradiated with excitation light from the illuminant, the photodetector receives fluorescence(or emission light) generated from the indicator. The photodetector is a photoelectric conversion element and outputs electric signals corresponding to light-receiving intensity. Based on the electric signals from the photodetector, analyte density in the solution is calculated.

In recent years, in order to measure an analyte in a micro-scale sample, a minute fluorometer has been proposed, which is manufactured by employing semiconductor manufacturing technology and MEMS technology. The minute fluorometer is hereinafter referred to as "a fluorescent sensor".

For example, a fluorescent sensor 130 shown in Figs. 1 and 2 is disclosed in WO2010/119916. A sensor unit 110 is a main functional unit of the fluorescent sensor 130 and includes a silicon substrate 111 on which a photoelectric conversion element 112 is formed, a filter layer 114, a luminous element chip 115, a transparent protective layer 116, an indicator 117, and a light blocking layer 118. An analyte 2 passes through the light blocking layer 118 and enters the indicator 117. The filter layer 114 of the fluorescent sensor 130 blocks excitation light and transmits fluorescence. The luminous element chip 115 also transmits fluorescence.

In the fluorescent sensor 130, when excitation light generated from the luminous element chip 115 enters the indicator 117, the indicator 117 generates fluorescence corresponding to analyte density.

A part of the fluorescence generated from the indicator 117 passes through the luminous element chip 115 and the filter layer 114, and enters the photoelectric conversion element 112 to be photoelectrically converted. The filter layer 114 darkens, to the level that is fine to measure compared to fluorescence intensity, excitation light emitted from the luminous element chip 115 in the direction of the photoelectric conversion element 112 (downward). The fluorescent sensor 130 has a simple structure and is easy to downsize.

However, among the fluorescence emitted from the indicator 117, the fluorescent sensor 130 can only detect fluorescence emitted in the direction of the photoelectric conversion element 112, that is, fluorescence emitted downward. Accordingly, although the fluorescent sensor 130 is downsized, it is not easy to obtain a high level of detection sensitivity.

An object of embodiments of the present invention is to provide a downsized fluorescent sensor and a sensor system, both having a high level of detection sensitivity.

### Summary of Invention

### Solution to Problem

A fluorescent sensor according to one aspect of the present invention includes:
a detecting substrate in which a photoelectric conversion element configured to convert fluorescence into an electric signal is formed in a wall surface of a through-hole which penetrates first and second main surfaces;
an indicator arranged inside the through-hole and configured to generate the fluorescence of intensity corresponding to analyte density when the indicator receives excitation light;
a filter layer which covers the photoelectric conversion element and is configured to transmit the fluorescence and block the excitation light;
a light blocking layer which covers an opening of the first main surface of the through-hole, and through which the analyte passes; and
a luminous element chip which covers a region just below an opening of the second main surface of the through-hole and is configured to generate the excitation light.

A fluorescent sensor system according to another aspect of the present invention includes a needle-type sensor having, on a needle head:
a detecting substrate having a first photoelectric conversion element configured to convert fluorescence into an electric signal in a wall surface of a through-hole which penetrates first and second main surfaces and a second photoelectric conversion element in the second main surface;
an indicator arranged inside the through-hole and configured to react to an analyte and generate the fluorescence of intensity corresponding to the density of the analyte when the indicator receives excitation light;
a light blocking layer which covers an opening of the first main surface of the through-hole, and through which the analyte passes; and
a luminous element chip which covers the region just below the opening of the second main surface and a region just below the second photoelectric conversion element, and is configured to generate the excitation light; and
a processing unit configured to correct the electric signal from the photoelectric conversion element by using an electric signal from the second photoelectric conversion element.

### Brief Description of Drawings

Fig. 1 illustrates a cross-sectional structure of a sensor unit of a fluorescent sensor in the related art.
Fig. 2 is an exploded view for explaining the structure of the sensor unit of the fluorescent sensor in the related art.
Fig. 3 illustrates a sensor system having a fluorescent sensor of a first embodiment.
Fig. 4 is an exploded view for explaining the structure of the fluorescent sensor of the first embodiment.
Fig. 5 is a schematic view showing a cross-sectional structure of a sensor unit of the fluorescent sensor of the first embodiment.
Fig. 6A is a schematic view showing a cross-sectional structure of the sensor unit in order to explain a method for manufacturing the fluorescent sensor of the first embodiment.
Fig. 6B is a schematic view showing a cross-sectional structure of the sensor unit in order to explain the method for manufacturing the fluorescent sensor of the first embodiment.
Fig. 6C is a schematic view showing a cross-sectional structure of the sensor unit in order to explain the method for manufacturing the fluorescent sensor of the first embodiment.
Fig. 6D is a schematic view showing a cross-sectional structure of the sensor unit in order to explain the method for manufacturing the fluorescent sensor of the first embodiment.
Fig. 6E is a schematic view showing a cross-sectional structure of the sensor unit in order to explain the method for manufacturing the fluorescent sensor of the first embodiment.
Fig. 6F is a schematic view showing a cross-sectional structure of the sensor unit in order to explain the method for manufacturing the fluorescent sensor of the first embodiment.
Fig. 6G is a schematic view showing a cross-sectional structure of the sensor unit in order to explain the method for manufacturing the fluorescent sensor of the first embodiment.
Fig. 7 is a schematic view showing a cross-sectional structure of a sensor unit of a fluorescent sensor of a variation of the first embodiment.
Fig. 8 is a schematic view showing a cross-sectional structure of a sensor unit of a fluorescent sensor of a second embodiment.

### Best Mode for Carrying Out the Invention

### <First Embodiment>

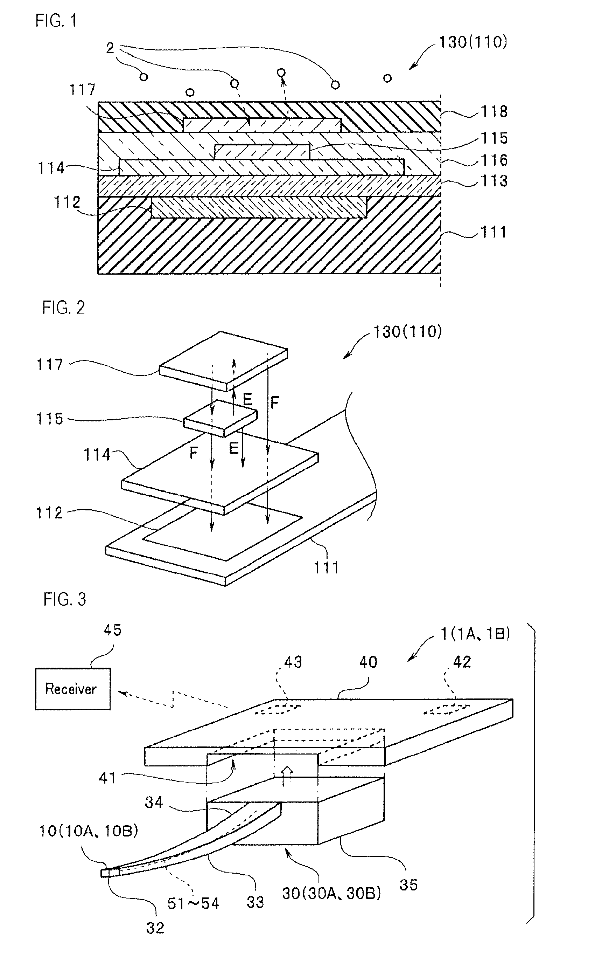

First, a fluorescent sensor 30 and a sensor system 1 according to the first embodiment of the present invention will be described. As shown in Fig. 3, the sensor system 1 includes the fluorescent sensor 30, a main body 40, and a receiver 45 which receives and records signals from the main body 40. The signals are transmitted or received between the main body 40 and the receiver 45 in a wired or wireless manner.

The fluorescent sensor 30 includes a needle 34 which punctures a specimen, and a connector 35 which is connected to a rear end of the needle 34. The needle 34 includes an elongated needle body 33 and a needle head 32 which includes a main functional unit, that is, a sensor unit 10. The needle head 32, the needle body 33, and the connector 35 may be formed integrally by using the same material or may be formed separately and then connected together.

The connector 35 is removably fitted into a fitting section 41 of the main body 40. A plurality of wires 51 to 54 extended from the sensor unit 10 of the fluorescent sensor 30 is electrically coupled with the main body 40 by mechanically fitting the connector 35 to the fitting section 41 of the main body 40.

The fluorescent sensor 30 is a needle-type sensor which can consecutively measure analyte density for a predetermined period, for example one week, after inserting the sensor unit 10 into a body. Alternatively, without inserting the sensor unit 10 into a body, extracted bodily fluid, or bodily fluid circulating in the body through a fluid channel outside the body, may be brought into contact with the sensor unit 10 outside the body.

The main body 40 includes a control unit 42 which drives and controls the sensor unit 10, and a processing unit 43 which processes signals output from the sensor unit 10. The control unit 42 and the processing unit 43 each include a processing circuit such as a CPU, but both units may share the same CPU. The control unit 42 and/or the processing unit 43 may be arranged on the connector 35 of the fluorescent sensor 30 or on the receiver 45.

The main body 40 further includes, for example, a radio antenna to transmit/receive radio signals to/from the receiver 45 and a battery (not shown). In cases where the main body 40 transmits/receives the signals from the receiver 45 with wire, the main body 40 includes a signal wire instead of a radio antenna. In cases where the main body 40 includes a memory unit having necessary capacity, the receiver 45 may be omitted.

### <Structure of Sensor Unit>

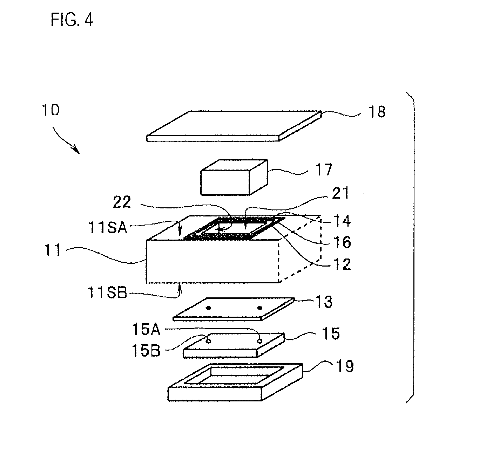

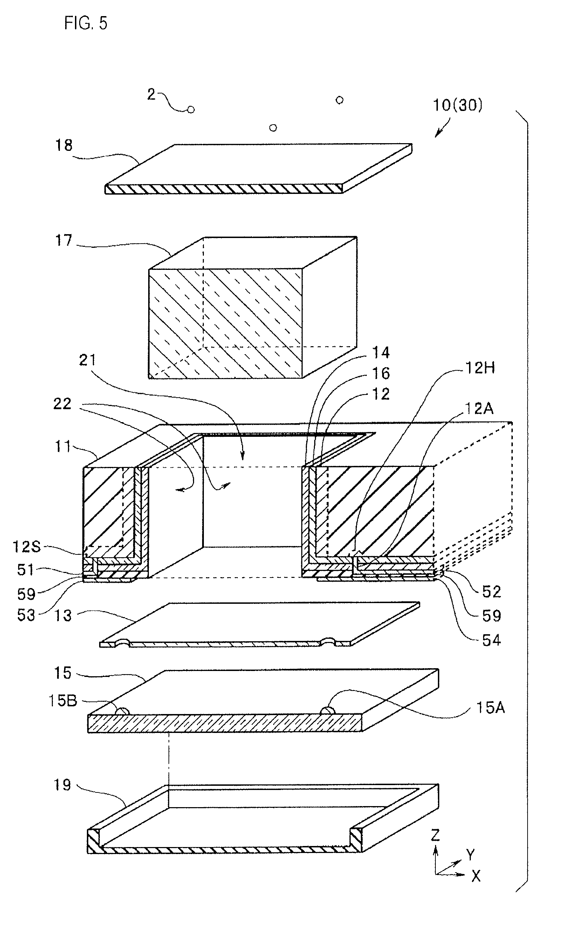

Next, the structure of the main functional unit, that is, the sensor unit 10 of the fluorescent sensor 30 will be described with reference to Figs. 4 and 5. Each drawing is a schematic view for explanation, and is different from an actual unit in horizontal/vertical dimensional ratio and the like, and also there is a case where some components are not illustrated. A shown in Figs. 4 and 5 is referred to as direction upward.

The fluorescent sensor 30 includes, as main functional components, a detecting substrate 11, a filter layer 14, an indicator 17, a light blocking layer 18, and a light emitting diode (LED) chip 15 which is a luminous element chip.

In the detecting substrate 11 including semiconductor such as silicon, a through-hole 21 is formed, which penetrates a first main surface 11SA and a second main surface 11SB.

In wall surfaces 22 of the through-hole 21, a photo diode (PD) element 12 is formed, which is a photoelectric conversion element that converts fluorescence into electric signals. That is, the PD element 12 is placed so as to encircle the indicator 17 arranged inside the through-hole 21 so that a light-receiving surface faces the indicator 17. The PD element 12 may be formed in all or part of four wall surfaces 22 of the rectangular through-hole 21.

On the other hand, on the second main surface 11SB of the detecting substrate 11, detection signal wires 51 and 52 are arranged in order to output detection signals from the PD element 12. The detection signal wire 51 is coupled with a light-receiving unit of the PD element 12 through a low-resistance region 12S which is of the same semiconductor-impurity type as the light-receiving unit of the PD element 12. The detection signal wire 52 is coupled with a low-resistance region 12H which is of the same semiconductor-impurity type as the detecting substrate 11.

On the second main surface 11SB of the detecting substrate 11, drive signal wires 53 and 54 are arranged, which supply driving signals to drive signal electrodes 15A and 15B of the LED chip 15.

A transparent protective layer 16 and a filter layer 14 are arranged so as to cover the PD element 12 formed in the wall surfaces 22. That is, the protective layer 16 and the filter layer 14 are arranged on the light-receiving surface side of the PD element 12 so as to cover the PD element 12. The filter layer 14 blocks excitation light having a wavelength, for example, of 375 nm and transmits fluorescence having a wavelength, for example, of 460 nm.

In the fluorescent sensor 30, the LED chip 15 is coupled with the detecting substrate 11 through a transparent connection layer 13. The dimension of the LED chip 15 in a plan view is larger than the dimension of the opening of the second main surface 11SB of the through-hole 21. Accordingly, the LED chip 15 thoroughly covers a region just below the opening of the second main surface 11SB of the through-hole 21. In other words, a bottom surface of the through-hole 21 includes the connection layer 13 which is on the top of the LED chip 15.

The connection layer 13 is a protective layer which covers the surface of the LED chip 15 and the second main surface 11SB of the detecting substrate 11. Usable materials for the connection layer 13 include organic resins such as an epoxy resin, a silicone resin, and a transparent amorphous fluorinated resin, and transparent inorganic materials such as a silicon oxide film and a silicon nitride film. The connection layer 13 is selected from materials having electric insulation properties, fluid barrier properties, and excellent transmission of excitation light.

The connection layer 13 may have an opening in a region just below the opening of the second main surface 11SB of the through-hole 21. In this case, the bottom surface of the through-hole 21 will be the surface of the LED chip 15. Preferred materials for the connection layer 13 include one which blocks excitation light.

The indicator 17 arranged inside the through-hole 21 generates fluorescence of intensity corresponding to the density of the analyte 2, by means of interaction with the entered analyte 2 and the excitation light. The thickness of the indicator 17 is about several tens of µm to several hundred µm. The indicator 17 is provided with a base material including a fluorescent dye which generates fluorescence of intensity corresponding to an amount of the analyte 2 having entered the indicator, that is, analyte density in a solution to be measured.

The light blocking layer 18 covering the opening of the first main surface 11SA of the through-hole 21 has a thickness of about several tens of µm. The light blocking layer 18 prevents excitation light and fluorescence from leaking outside and also prevents outside light from entering inside. Further, the light blocking layer 18 has analyte permeability and does not prevent the analyte 2 from passing therethrough.

An anti-light-leaking layer 19 arranged so as to cover the bottom surface (undersurface) and the side surface of the LED chip 15 prevents, from leaking outside, the excitation light emitted from the bottom and side surfaces and the excitation light reflected from the second main surface 11SB of the detecting substrate 11. That is, although the anti-light-leaking layer 19 has a similar function to the light blocking layer 18, analyte permeability is not necessary for the anti-light-leaking layer 19.

### <Method for Manufacturing Fluorescent Sensor>

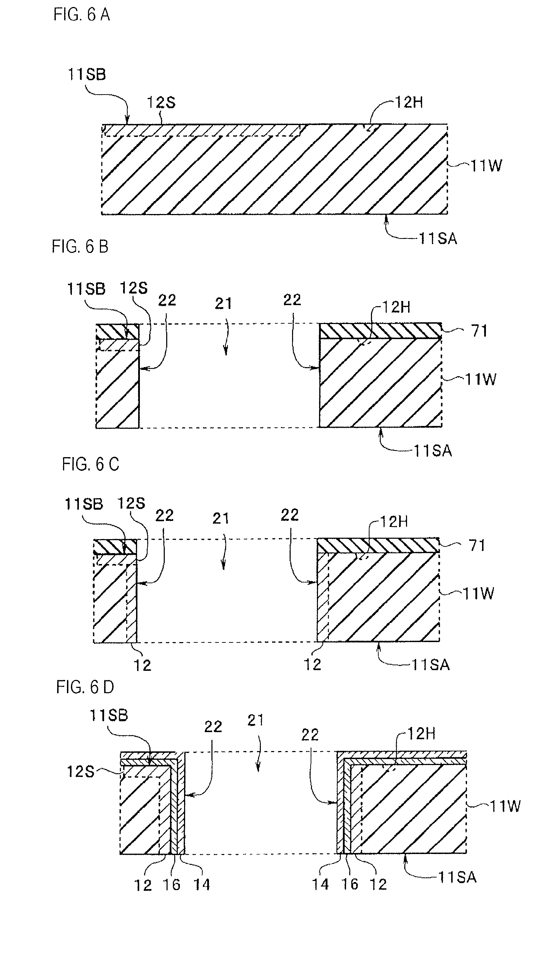

Next, a method for manufacturing the fluorescent sensor 30 will be briefly described with reference to Figs. 6A to 6G. Figs. 6A to 6G are partial sectional views showing a region of one sensor unit 10 of the fluorescent sensor 30, but in the actual process, a plurality of the sensor units 10 of the fluorescent sensor 30 is collectively manufactured as a wafer process.

First, as shown in Fig. 6A, the low-resistance regions 12S, 12H for outputting detection signals from the PD element 12 are formed on the second main surface 11SB of a silicon wafer (detecting substrate) 11W by implanting impurities, using an ordinary semiconductor process.

That is, the low-resistance region 12S is formed by introducing impurities of the same semiconductor-impurity type as the light-receiving unit of the PD element 12, while the low-resistance region 12H is formed by introducing impurities of the same semiconductor-impurity type as a silicon wafer 11. For example, in cases where the light-receiving unit of the PD element is a P-type semiconductor, boron is introduced to the low-resistance region 12S, while phosphorous or arsenic is introduced to the low-resistance region 12H.

For materials of the detecting substrate 11, a single-crystal silicon is preferable in order to form the PD element 12 in the surface thereof, but glass or ceramic may be employed as well. In cases where the detecting substrate 11 includes glass and the like, a photoelectric conversion element is formed as the wall surfaces 22 of the through-hole 21 are coated with a semiconductor layer such as polysilicon.

As a photoelectric conversion element, a photoconductor element or a photo transistor element may be employed as well.

Next, as shown in Fig. 6B, through a mask layer 71 having an opening in a through-hole forming section, the silicon wafer 11W is etched from the side of the second main surface 11SB to form the through-hole 21. Various known methods can be employed for etching. The low-resistance region 12S is removed by etching except for a region connected with the detection signal wire 51.

A sectional configuration and measurement of the through-hole 21 is designed according to the specification of the fluorescent sensor 30. The sectional measurement of the through-hole 21 is preferably shaped in an elongated configuration, such as 150 µm in lengthwise direction and 500 µm in crosswise direction, since the sensor unit 10 is arranged at the position of the needle head 32. On the other hand, the sectional configuration (configuration in a plan view) of the through-hole 21 may be polygon, circle, ellipse or the like, but is preferably rectangle as it has high opening efficiency and is easy to process.

Next, as shown in Fig. 6C, the PD element 12 as the light-receiving unit is formed in the wall surfaces 22 of the through-hole 21. That is, the mask layer 71, in which a formation region of the through-hole 21 is an opening thereof, is arranged on the silicon wafer 11W. The silicon wafer 11W is inclined at 5 to 30 degrees, and ion implantation is carried out at least from four directions. For example, in cases where the silicon wafer 11W is of N-type, boron (B) is implanted at accelerating voltage of 10 to 200 keV, and in implantation amount of 1 × 10¹⁵ to 1 × 10¹⁶ cm⁻². In this case, a thin oxide layer having a thickness of 10 to 100 nm may be placed on the wall surfaces 22 of the through-hole 21. By heat treatment after ion implantation, the PD element 12 connected to the low-resistance region 12S is formed in the wall surfaces 22. The mask layer 71 is removed after heat treatment.

As shown in Fig. 6D, the protective layer 16 and the filter layer 14 are arranged in sequence by performing the CVD method or the like so as to cover the PD element 12 of the wall surfaces 22 of the through-hole 21 in the silicon wafer 11W.

The protective layer 16 is a single-layer film of an inorganic insulation layer such as a silicon oxide layer and a silicon nitride layer, or a multi-layer layer obtained by laminating the single-layer films. For the protective layer 16, a layer having high transmission of fluorescence can be used, such as a silicon oxide layer, a silicon nitride layer, a multi-laminated layer including silicon oxide and silicon nitride layers, a silicone resin layer, or a transparent amorphous fluorinated resin layer.

The filter layer 14 may be of multiple-interference type, but is preferably of absorption type such as a single-layer including silicon, a silicon carbide, an oxide silicon, a nitride silicon or organic materials, and a multi-layer obtained by laminating the single-layer. For example, a silicon layer and a silicon carbide layer have transmission of 10⁻⁵% or less at a wavelength of 375 nm, while having transmission of 10% or less at a wavelength of 460 nm. That is, the proportion of (transmission at excitation light wavelength/transmission at fluorescence wavelength) has selective permeability with a six-digit difference or more. The filter layer 14 may be a band pass filter which only transmits the fluorescence generated from the indicator 17.

The filter layer 14 is preferably arranged not only on the wall surfaces 22 but also on the second main surface 11SB. The filter layer 14 arranged on the second main surface 11SB has an effect to lower noise level of the PD element 12 in order to prevent excitation light from entering the detecting substrate 11.

That is, the fluorescent sensor 30 in which the filter layer 14 is arranged on the second main surface 11SB has high sensitivity, since an S/N ratio of the detection signal output by the PD element 12 is high.

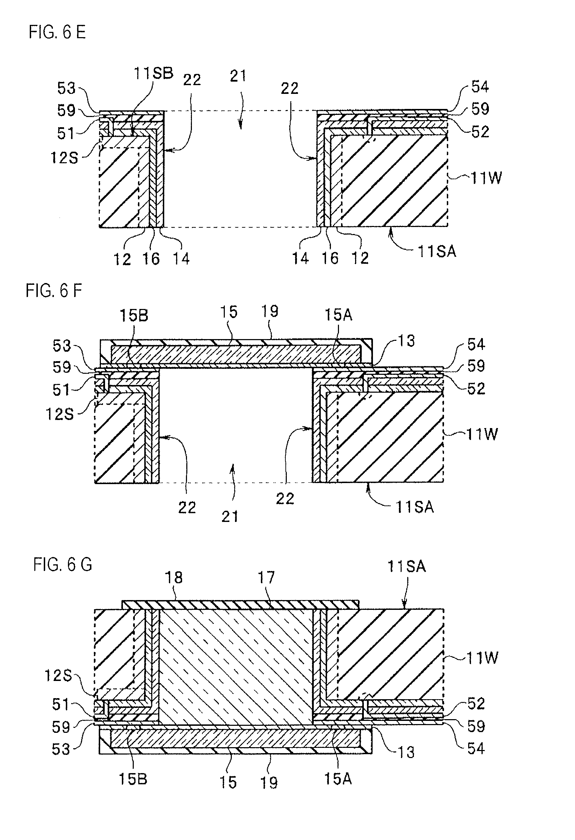

Next, as shown in Fig. 6E, the detection signal wires 51, 52 and the drive signal wires 53, 54 are arranged by a sputtering method, a vapor deposition method or the like. The detection signal wires 51, 52 are to output the detection signals from the PD element 12, while the drive signal wires 53, 54 are to supply the LED chip 15 with drive signals.

Examples of materials used for the detection signal wires 51, 52 and drive signal wires 53, 54 include metal materials such as Al, Cu, Au, Pt, W, or Mo, and a low-resistance polysilicon including high density of impurities. Examples of materials used for an interlayer insulation layer 59 include inorganic insulation materials such as a silicon oxide film or a silicon nitride film, and organic insulation materials such as polyimide.

In order to prevent the excitation light generated from the LED chip 15 from entering the detecting substrate 11, the detection signal wires 51, 52 and/or the drive signal wires 53, 54 may be arranged widely.

As shown in Fig. 6E, the fluorescent sensor 30 has a multi-layer wire structure in which the detection signal wires 51, 52 and the drive signal wires 53, 54 are arranged on different layers through the interlayer insulation layer 59. However, the detection signal wires 51, 52 and the drive signal wires 53, 54 may be made with a single wire layer.

In the case of the multi-layer wire structure, the interlayer insulation layer 59 is formed between the detection signal wires 51, 52 and the drive signal wires 53, 54 by the CVD method or the like. In this case, when the interlayer insulation layer 59 is also formed on the surface of the filter layer 14 on the wall surfaces of the through-hole 21, the interlayer insulation layer 59 preferably includes transparent materials such as oxide silicon similar to the protective layer 16. The interlayer insulation layer 59 formed on the surface of the filter layer 14 has a function to protect the filter layer 14.

Next, as shown in Fig. 6F, the LED chip 15 is coupled through the connection layer 13 so as to cover the opening of the second main surface 11SB of the through-hole 21 of the detecting substrate 11.

A luminous element chip is not restricted to the LED chip 15 and is selected from chips on which a luminous element is formed, such as an organic EL element, an inorganic EL element, and a laser diode element. The LED chip 15 is preferable from the viewpoint that the LED chip 15 has fluorescence transmission, light generation efficiency, wide wavelength selectivity of excitation light and generates little light with a wavelength other than ultraviolet which is to be excitation light.

The connection layer 13 is manufactured by applying, for example, a resin and hardening the resin. By the CVD method or the like, a transparent SiO₂ layer or a nitride silicon layer may be arranged on the surface to be coated with a resin. In order to electrically couple the drive signal electrodes 15A, 15B of the LED chip 15 with the drive signal wires 53, 54, a conductive adhesive or flip-chip bonding is used.

That is, when the LED chip 15 is connected to the second main surface 11SB of the detecting substrate 11, the drive signal electrodes 15A, 15B of the LED chip 15 are simultaneously electrically coupled with the drive signal wires 53, 54. In other words, as the LED chip 15 and the detecting substrate are physically connected and also electrically coupled with each other, the fluorescent sensor 30 is easy to manufacture. The connection layer 13 also has a function as a sealing member which seals the electrically coupled parts.

The anti-light-leaking layer 19 is arranged on the undersurface and the side surfaces of the LED chip 15. The material for the anti-light-leaking layer 19 may be the same as that for the light blocking layer 18, or may be organic resins containing carbon black, metals, a multi-layer film or a compound film containing those materials. The LED chip 15 on which the anti-light-leaking layer 19 is arranged beforehand may be connected to the detecting substrate 11.

As for the anti-light-leaking layer 19, when a metallic film having a high reflection ratio such as a film made of aluminum or silver is used, the anti-light-leaking layer 19 can obtain a function as a reflection film for reflecting excitation light radiated from the bottom and side surfaces of the LED chip 15 in the direction upward or in the direction toward the indicator 17.

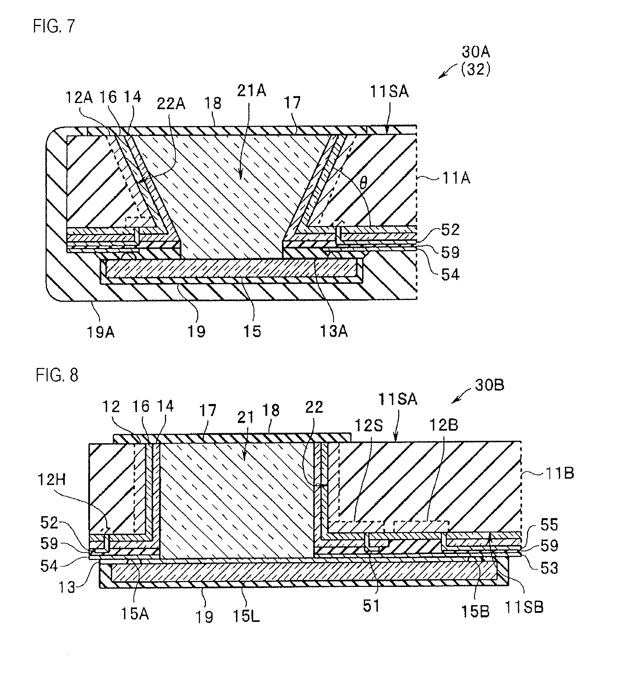

The anti-light-leaking layer 19 may be arranged on the entire undersurface, the side surface, and the upper surface which is not covered with the light blocking layer 18, of the detecting substrate 11. Further, a first light blocking layer covering the LED chip 15 and a second light blocking layer covering the detecting substrate 11 together with the first light blocking layer may be arranged as well (see Fig. 7).

Next, as shown in Fig. 6G, the silicon wafer 11W is inverted upside down and the indicator 17 is arranged inside thereof from the opening of the first main surface 11SA of the through-hole 21.

A fluorescent dye is selected according to the type of the analyte 2. If the fluorescent dye reversibly converts the intensity of fluorescence generated according to the amount of the analyte 2, the fluorescent dye can be used in any case. In order to measure sugars such as glucose, the fluorescent sensor 30 uses, as the fluorescent dye, a ruthenium organic complex, a fluorescent phenylboronic acid derivative, or a material to be reversibly bound with glucose such as fluorescein bound with protein.

The indicator 17 includes, for example, as a base material, a hydrogel which easily becomes hydroscopic, and contains the fluorescent dye inside the hydrogel or contains the fluorescent dye bound with the hydrogel. Examples of components of the hydrogel that can be used include polysaccharides such as methylcellulose and dextran, acrylate hydrogel produced by polymerizing monomers such as (meth)acrylamide, methyl acrylamide and hydroxyethyl acrylate, or urethane hydrogel produced from polyethylene glycol and diisocyanate.

The indicator 17 may be connected, through an adhesive layer including a silane coupling agent or the like, to the wall surfaces 22 of the through-hole 21, to the light blocking layer 18 on the upper surface, or to the connection layer 13 on the undersurface. In cases where a region of the connection layer 13 just below the through-hole 21 has an opening, the indicator 17 may be connected to the surface of the LED chip 15 which includes the bottom surface of the through-hole 21.

The indicator 17 may be produced by filling the through-hole 21 with an indicator including a gel skeleton formation material before polymerizing, and then polymerizing after covering the opening with the light blocking layer 18. For example, a phosphate buffer solution including a fluorescent dye, a gel skeleton formation material, and a polymerization initiator are inserted into the through-hole 21 and after leaving the resultant under nitrogen atmosphere for one hour, the indicator 17 is produced. As for the fluorescent dye, 9,10-bis[N-[2-(5,5-dimethylborinane-2-yl)benzyl]-N-[6'-[(acryloyl polyethylene glycol-3400)carbonylamino]-n-hexylamino]methyl]-2-acetylanthracene(F-PEG-AAm) is used. As for the gel skeleton formation material, acrylamide is used. As for the polymerization initiator, sodium peroxydisulfate and N,N,N',N'-tetramethylethylenediamine is used.

Finally, the light blocking layer 18 is arranged so as to cover the opening of the first main surface 11SA of the through-hole 21. Examples of materials used for the light blocking layer 18 include a metallic or ceramic inorganic lamella which has a porous structure in submicron size, a composite structure including hydrogels mixed with carbon black in the base material of an organic polymer such as polyimide and polyurethane, a resin obtained by mixing carbon black into an analyte permeable polymer such as celluloses and polyacrylamide, and a resin obtained by laminating the above.

As the wafer 11W is individually divided, a plurality of the sensor units 10 is integrally manufactured. As each sensor unit 10 is connected to the head of the needle body 33 separately produced and extended from the connector 35, the fluorescent sensor 30 is completed.

A method for manufacturing the fluorescent sensor is not restricted thereto, and may include, for example, individually dividing the silicon wafer 11W shown in Fig. 6E and connecting the LED chip 15 and the like to each detecting substrate 11.

Moreover, the silicon wafer 11W may be processed and connected to the connector 35 such that an extending portion of the detecting substrate 11 includes the needle body 33 of the needle 34.

As described above, the wafer process enables collective mass production of the fluorescent sensors 30. Accordingly, the fluorescent sensor 30 with stable quality can be provided at a low price.

### <Motion of Fluorescent Sensor>

Next, a motion of the fluorescent sensor 30 will be described.

The LED chip 15 pulse emits excitation light having a center wavelength of 375 nm, for example, once every 30 seconds. For example, a pulse current flowing into the LED chip 15 is from 1 mA to 100 mA, and a pulse width of emitted light is from 1 ms to 100 ms.

The excitation light generated from the LED chip 15 passes through the connection layer 13 and enters the indicator 17. The indicator 17 generates fluorescence of intensity corresponding to the density of the analyte 2. The analyte 2 passes through the light blocking layer 18 and enters the indicator 17. The fluorescent dye of the indicator 17 generates fluorescence having a wavelength of 460 nm, for example, which is longer than excitation light having a wavelength of 375 nm.

A part of the fluorescence generated from the indicator 17 passes through the filter layer 14 and the protective layer 16, and then enters the PD element 12. In the PD element 12, the fluorescence is photoelectrically converted, photogenically charged, and then output as detection signals.

In the fluorescent sensor 30, the processing unit 43 of the main body 40 carries out processing based on detection signals, that is, a current resulted from photogenic charges from the PD element 12 or a voltage resulted from accumulated photogenic charges, and estimates the amount of analyte.

The fluorescent sensor 30 detects fluorescence by the PD element 12 formed in the wall surfaces 22 encircling the indicator 17. In other words, among the fluorescence emitted from the indicator 17 in two vertical directions and in four directions of side surfaces, i.e., in six directions in total, the fluorescent sensor 30 detects the fluorescence emitted in the four directions. Accordingly, although the fluorescent sensor 30 is small, it has high detection sensitivity. Similarly, the sensor system 1 including the fluorescent sensor 30 has high detection sensitivity.

That is, the fluorescent sensor 30 has the LED chip 15 adjacent to the indicator 17 and detects the fluorescence generated from the indicator 17 with the PD element 12 formed in the adjacent surface 22. Accordingly, the fluorescent sensor 30, in spite of its ultra-small size, has high detection sensitivity. Further, as a plurality of fluorescent sensors can be collectively manufactured by processing one detecting substrate, the fluorescent sensor 30 is easy to process and is economical.

### <Variation of First Embodiment>

In the fluorescent sensor 30 of the first embodiment, the wall surfaces 22 of the through-hole 21 are substantially vertical to the first main surface 11SA (second main surface 11SB). To the contrary, as shown in Fig. 7, in a fluorescent sensor 30A of a sensor system 1A according to a variation of the first embodiment, wall surfaces 22A of a through-hole 21A of a detection substrate 11A in a sensor unit 10A have a taper configuration, that is, the wall surface thereof is inclined at a predetermined angle θ relative to the main surface, and an opening of a first main surface 11SA is larger than an opening of a second main surface 11SB. The through-hole 21A whose wall surfaces 22A have a taper configuration can be formed by wet etching which employs tetramethylammonium hydroxide (TMAH) solution, potassium hydroxide (KOH) solution and the like.

For example, in cases where a silicon (100) surface is used for the silicon wafer 11W, anisotropic etching is performed in which the etching rate of a (111) surface becomes slow compared to the (100) surface, and the wall surfaces 22A of the through-hole 21A will be the (111) surface and the angle θ will be 54.7 degrees.

As the through-hole 21A whose wall surfaces 22A are inclined has a larger area to form the PD element 12A than the through-hole 21 whose wall surfaces 22 are vertical, the through-hole 21A has not only higher sensitivity but also higher productivity as the PD element 12A is easily formed in the wall surfaces 22A. When the inclination angle θ of the wall surfaces 22A is from 30 to 70 degrees, the above effect will be noticeable.

As shown in Fig. 7, in the fluorescent sensor 30A, a connection layer 13A includes a light blocking material having almost the same opening as the opening of the second main surface 11SB of the through-hole 21A. The first anti-light-leaking layer 19 includes aluminum having high reflection ratio. Further, a second anti-light-leaking layer 19A including a carbon-containing resin with high light blocking effect covers the light blocking layer 18 of the needle head 32 except for the upper side thereof.

### <Second Embodiment>

Next, a sensor system 1B and a fluorescent sensor 30B of the second embodiment will be described. As the fluorescent sensor 30B and the like are similar to the fluorescent sensor 30 and the like, the same components are denoted with the same symbols and the explanation of the components is omitted.

As shown in Fig. 8, in a detecting substrate 11B of a sensor unit 10B in the fluorescent sensor 30B, a PD element 12B is formed in addition to the PD element 12 which is the first photoelectric conversion element for detecting fluorescence generated from the indicator 17. The PD element 12B is a second photoelectric conversion element for detecting excitation light generated from an LED chip 15L. That is, a light-receiving unit of the first PD element 12 is formed in the wall surfaces 22 of the through-hole 21 of the detecting substrate 11B, and a light-receiving unit of the second PD element 12B is formed in the second main surface 11SB. The first and second photoelectric conversion elements are PD elements having the same structure.

The LED chip 15L covers not only a region just below an opening of the second main surface 11SB of the through-hole 21 but also a region just below the second PD element 12B. That is, the dimension of the LED chip 15L in a plan view is large enough to cover the region just below the opening of the through-hole 21 and the region just below the PD element 12B.

The filter layer 14 is not arranged on the surface of the PD element 12B. Accordingly, the PD element 12B outputs electric signals (detection signals) corresponding to the intensity of excitation light generated from the LED chip 15L.

A method for manufacturing the fluorescent sensor 30B is similar to the method for manufacturing the fluorescent sensor 30. In the process shown in Fig. 6A, the low-resistance regions 12S and 12H having low resistance are formed by implanting impurities and at the same time, a light-receiving unit of the PD element 12B is formed. The PD element 12 in the wall surfaces of the through-hole 21 is formed in the process shown in Fig. 6C similarly to the fluorescent sensor 30.

On the second main surface 11SB of the detecting substrate 11B, a detection signal wire 55 is also arranged, which transmits detection signals output from the PD element 12B. The detection signal wire 52 connected to the low-resistance region 12H is a common wire of the PD element 12 and the PD element 12B.

The intensity of the fluorescence generated from the indicator 17 increases or decreases as influenced not only by analyte density but also by the intensity of emitted excitation light. However, in the sensor system 1B, the processing unit 43 for processing the electric signals (detection signals) output from the fluorescent sensor 30B corrects the electric signals (detection signals) from the first PD element 12 based on electric signals from the second PD element 12B.

The fluorescent sensor 30B and the sensor system 1B have the same effect as the fluorescent sensor 30, the sensor system 1 and the like. Further, the fluorescent sensor 30B and the sensor system 1B can carry out highly accurate measurement even when the intensity of the excitation light has been changed by luminous efficiency dispersion of the LED chip 15L or by excitation light amount drift during operation.

The fluorescent sensor 30B can obtain the same effect as the fluorescent sensor 30A, by making the wall surfaces of the through-hole into a taper configuration.

In the above description, the fluorescent sensor 30 and the like for detecting sugars such as glucose have been exemplified, but the fluorescent sensor 30 can be applied to various uses such as an enzyme sensor, a pH sensor, an immune sensor, and a microorganism sensor, depending on a fluorescent dye to be selected. For example, in order to measure hydrogen-ion concentration or carbon dioxide *in vivo*, a hydroxypyrene trisulfonic acid derivative and the like are employed as a fluorescent dye. In order to measure sugars, a phenyl boronic acid derivative having a fluorescence residue is employed as a fluorescent dye. In order to measure potassium ion, a crown ether derivative having a fluorescence residue is employed as a fluorescent dye.

That is, the present invention is not restricted to the embodiments and the variation described above, but can be modified and/or revised in various ways as long as the gist of the present invention is not changed.

This application is based upon and claims the benefit of priority from Japanese Patent Application No. 2012-031964 filed in Japan on February 16, 2012, the entire contents of which are incorporated in the present description, claims, and drawings.

## Claims

1. A fluorescent sensor, comprising:
a detecting substrate in which a photoelectric conversion element configured to convert fluorescence into an electric signal is formed in a wall surface of a through-hole which penetrates first and second main surfaces;
an indicator arranged inside the through-hole and configured to generate the fluorescence of intensity corresponding to analyte density when the indicator receives excitation light;
a filter layer which covers the photoelectric conversion element and is configured to transmit the fluorescence and block the excitation light;
a light blocking layer which covers an opening of the first main surface of the through-hole, and through which the analyte passes; and
a luminous element chip which covers a region just below an opening of the second main surface of the through-hole and is configured to generate the excitation light.

2. The fluorescent sensor according to claim 1, wherein the fluorescent sensor is a needle-type sensor having, on a needle head, a sensor unit including the detecting substrate, the filter layer, the indicator, the light blocking layer, and the luminous element chip.

3. The fluorescent sensor according to claim 2, wherein a detection signal wire connected to the photoelectric conversion element and a drive signal wire connected to the luminous element chip are arranged on the second main surface.

4. The fluorescent sensor according to claim 3, wherein the filter layer is also arranged on the second main surface.

5. The fluorescent sensor according to claim 4, wherein the wall surface of the through-hole has a taper configuration.

6. The fluorescent sensor according to claim 1, wherein a second photoelectric conversion element is formed in the second main surface, and
the luminous element chip covers the region just below the opening of the second main surface and a region just below the second photoelectric conversion element.

7. The fluorescent sensor according to claim 6, wherein the electric signal from the photoelectric conversion element is corrected by using an electric signal from the second photoelectric conversion element.

8. A sensor system, comprising:
a needle-type sensor having, on a needle head:
a detecting substrate having a first photoelectric conversion element configured to convert fluorescence into an electric signal in a wall surface of a through-hole which penetrates first and second main surfaces and a second photoelectric conversion element in the second main surface;
an indicator arranged inside the through-hole and configured to react to an analyte and generate the fluorescence of intensity corresponding to the density of the analyte when the indicator receives excitation light;
a light blocking layer which covers an opening of the first main surface of the through-hole, and through which the analyte passes; and
a luminous element chip which covers the region just below the opening of the second main surface and a region just below the second photoelectric conversion element, and is configured to generate the excitation light; and
a processing unit configured to correct the electric signal from the photoelectric conversion element by using an electric signal from the second photoelectric conversion element.
